# EUROPÄISCHE PATENTSCHRIFT

(11) **EP 2 602 473 B1**
(45) Veröffentlichungstag und Bekanntmachung des Hinweises auf die Patenterteilung: **04.01.2017**
(21) Anmeldenummer: 12193318.8
(22) Anmeldetag: 20.11.2012
(51) Int. Cl.: F02M 37/22, B01D 36/00

(54) **Kraftstofffilter einer Brennkraftmaschine und Filterelement eines Kraftstofffilters**
Fuel filter of an internal combustion engine and filter element of a fuel filter
Filtre de carburant d'un moteur à combustion interne et élément de filtre d'un filtre de carburant

(30) Priorität: 09.12.2011 DE 102011120653
(43) Veröffentlichungstag der Anmeldung: 12.06.2013
(73) Patentinhaber: MANN + HUMMEL GMBH, 71638 Ludwigsburg (DE)
(72) Erfinder: Veit, Martin, 71116 Gärtringen (DE); Klein, Martin, 71634 Ludwigsburg (DE)

(56) Entgegenhaltungen:
- EP-A2- 1 256 707
- WO-A1-2011/107262
- US-A- 4 372 847
- US-A- 4 477 345
- US-A1- 2009 250 402

## Beschreibung

### Technisches Gebiet

Die Erfindung betrifft einen Kraftstofffilter für Kraftstoff, insbesondere Dieselkraftstoff, einer Brennkraftmaschine insbesondere eines Kraftfahrzeugs, mit einem Gehäuse, welches wenigstens einen Kraftstoffeinlass für zu reinigenden Kraftstoff, wenigstens einen Kraftstoffauslass für gereinigten Kraftstoff und wenigstens einen Wasserauslass für vom Kraftstoff abgeschiedenes Wasser aufweist und in dem ein Filterelement angeordnet ist, das den Kraftstoffeinlass dicht von dem Kraftstoffauslass trennt und das ein als Hohlkörper ausgestaltetes Filtermedium aufweist, das zur Filtrierung des Kraftstoffs von innen nach außen oder von außen nach innen durchströmbar ist.

Ferner betrifft die Erfindung ein Filterelement eines Kraftstofffilters für Kraftstoff, insbesondere Dieselkraftstoff, einer Brennkraftmaschine insbesondere eines Kraftfahrzeugs, das in einem Gehäuse des Kraftstofffilters so angeordnet werden kann, dass es einen Kraftstoffeinlass des Gehäuses dicht von einem Kraftstoffauslass trennt, und das ein als Hohlkörper ausgestaltetes Filtermedium aufweist, das zur Filtrierung des Kraftstoffs von innen nach außen oder von außen nach innen durchströmbar ist.

### Stand der Technik

Aus der US 2009/0250402 A1 ist ein Kraftstofffilter bekannt, mit dem Partikel und Wasser aus einem Kraftstoff entfernt werden können. Der Kraftstofffilter weist ein Gehäuse auf, in dem ein Filterelement angeordnet ist. Das Gehäuse verfügt über Einlässe für den zu filtrierenden Kraftstoff und über einen Auslass für den gereinigten Kraftstoff. Das Filterelement trennt die Einlässe von dem Auslass. Das Filterelement verfügt über eine zylindrische äußere Filtermedienstufe und eine zylindrische innere Filtermedienstufe, die mit einem radialen Abstand in der äußeren Filtermedienstufe angeordnet ist. Die äußeren Filtermedienstufen bestehen aus einem Material, das geeignet ist, freies Wasser und emulgiertes Wasser, das im Kraftstoff enthalten ist, zu koaleszieren. Die innere Filtermedienstufe besteht aus einem wasserseparierenden Medium, das geeignet ist, Wasser aus dem Kraftstoff zu separieren, so dass kein Wasser stromabwärts der inneren Filtermedienstufe gelangen kann. Zusätzlich sind die äußere Filtermedienstufe und die innere Filtermedienstufe geeignet, unerwünschte Partikel aus dem Kraftstoff zu entfernen oder einzufangen. Die innere Filtermedienstufe erstreckt sich zwischen einer ersten unteren Endkappe und einer oberen Endscheibe. Die erste untere Endkappe umfasst ein Paar von gegenüberliegenden Flanschen, die sich von einem Grundabschnitt der ersten unteren Endkappe nach oben erstrecken. Die äußere Filtermedienstufe erstreckt sich zwischen einer zweiten unteren Endkappe und der oberen Endscheibe. Die zweite untere Endkappe umfasst ebenfalls ein Paar von gegenüberliegenden Flanschen, die sich von einem Grundabschnitt nach oben erstrecken. Die äußere Filtermedienstufe hat eine größere vertikale Länge als die innere Filtermedienstufe. Durch den Längenunterschied wird eine Lücke zwischen einer unteren Stirnfläche der inneren Filtermedienstufe und einer unteren Stirnseite der äußeren Filtermedienstufe realisiert. Ein radialer Spalt befindet sich zwischen der äußeren Umfangsseite der inneren Filtermedienstufe und einer inneren Umfangsseite der äußeren Filtermedienstufe. Der radiale Spalt ermöglicht Wasser, das in der äußeren Filtermedienstufe koalesziert wurde, nach unten zu wandern, sobald Wassertropfen mittels der äußeren Filtermedienstufe gebildet wurden und diese verlassen. Der axiale Überlapp des Filtermediums der äußeren Filtermedienstufe und des Filtermediums der inneren Filtermedienstufe ist durch den Längenunterschied und die axiale Ausdehnung der fluidundurchlässigen Flansche der beiden Endkappen eingeschränkt. Die Flansche können den Strömungsverlauf des Kraftstoffs und/oder des Wassers in dem radialem Spalt und damit die Eigenschaften des Kraftstofffilters beeinflussen.

Die US4477345 A und US4372847 A beschreiben weitere Beispiele von Kraftstofffiltern mit einer hinter einem Filtermedium angeordneten Wasser-Trenneinheit.

Der Erfindung liegt die Aufgabe zugrunde, ein Filterelement eines Kraftstofffilters der eingangs genannten Art zu gestalten, bei dem die Abscheidung von im Kraftstoff enthaltenem Wasser weiter verbessert wird.

### Offenbarung der Erfindung

Diese Aufgabe wird erfindungsgemäß dadurch gelöst, dass im Strömungsweg des Kraftstoffs hinter dem Filtermedium, dieses umgebend oder in dem von ihm begrenzten Innenraum, eine Wasser-Trenneinheit mit einem als Hohlkörper gestalteten hydrophoben, kraftstoffdurchlässigen Trennmedium zur Abscheidung von im Kraftstoff enthaltenem Wasser und mit wenigstens einem Trennmedium-Stützkörper so angeordnet ist, dass zwischen dem Filtermedium und dem Trennmedium ein Ausfällspalt realisiert ist, der mit dem Wasserauslass verbunden ist, und das Trennmedium in einer Strömungsrichtung des Kraftstoffs durch das Trennmedium hinter stromaufwärtigen Seiten des wenigstens einen Trennmedium-Stützkörpers angeordnet ist. Der wenigstens eine Trennmedium-Stützkörper ist als Stützkorb mit einer Mehrzahl von Stützringen ausgebildet. Die Stützringe weisen geneigte, insbesondere abgerundete, Oberseiten auf. Das Trennmedium ist in Strömungsrichtung des Kraftstoffs durch das Trennmedium hinter den geneigten Oberseiten der Stützringe angeordnet ist.

Erfindungsgemäß ist das Filterelement mehrstufig. Mit dem Filtermedium werden insbesondere Partikel, welche den Kraftstoff verunreinigen, herausgefiltert. Im Strömungsweg des Kraftstoffs hinter dem Filtermedium ist das Trennmedium zur Abscheidung von im Kraftstoff enthaltenem Wasser angeordnet. Zwischen dem Filtermedium und dem Trennmedium ist der Ausfällspalt für abgeschiedenes Wasser realisiert. Dadurch, dass das Trennmedium hinter stromaufwärtigen Seiten des wenigstens einen Trennmedium-Stützkörpers angeordnet ist, ergibt sich ein breiterer Ausfällspalt als bei einem Filterelement, bei welchem das Trennmedium in Strömungsrichtung vor den stromaufwärtigen Seiten des Trennmedium-Stützkörpers angeordnet ist. An dem Trennmedium können Wassertropfen, welche im Kraftstoff enthalten sind, zurückgehalten werden, die dann über den Ausfällspalt aus dem Filterelement heraus gelangen. Dank des breiteren Ausfällspaltes können die abgeschiedenen Wassertropfen ungehinderter zum Wassersammelraum abfließen. Die ausgefällten Wassertropfen können abhängig vom spezifischen Gewicht des Kraftstoffs nach unten sinken oder nach oben steigen.

Vorteilhafterweise kann das Trennmedium siebartig sein. Ein siebartiges, insbesondere gewebtes Trennmedium hat den Vorteil, dass die Wassertropfen an den Siebfasern gehalten werden und insbesondere nach unten abtropfen beziehungsweise nach oben steigen können. An einem siebartigen Trennmedium wird das Wasser optimal zurückgehalten. Die Maschenöffnungen eines siebartigen Gewebes können einfach und definiert vorgegeben werden. Es kann optimal durchlässig für den Kraftstoff ausgestaltet sein. Mit einer siebartigen Struktur kann einfach der Druckverlust am Trennmedium minimiert werden. Vorteilhafterweise kann sich das Trennmedium nahezu über die gesamte Ausdehnung des Filtermediums erstrecken. Das Trennmedium kann so eine Reinseite des Filtermediums nahezu vollständig abdecken, so dass sich der Ausfällspalt nahezu über die gesamte Reinseite des Filtermediums erstrecken kann. Es kann so eine entsprechend große zu durchströmende Oberfläche am Filtermedium und am Trennmedium erreicht werden. So kann über die gesamte Ausdehnung der Reinseite des Filtermediums eine Wasserabscheidung erfolgen. Auf diese Weise wird die Wasserabscheidung verbessert. Ferner wird die Strömungsgeschwindigkeit des Kraftstoffs verringert, was sich auch positiv auf die Wasserabscheidung auswirkt.

Zur Stabilisierung des Filtermediums ist dieses vorzugsweise mittels wenigstens eines Filtermedium-Stützkörpers zumindest seitens des Ausfällspaltes abstützt.

Im Falle einer besonders bevorzugten Ausführungsform der Erfindung sind für flüssiges Fluid undurchlässige Bereiche des Filtermedium-Stützkörpers und des Trennmedium-Stützkörpers zumindest teilweise versetzt zueinander angeordnet, vorzugsweise derart, dass der Ausfällspalt zumindest in axialer Richtung einen kontinuierlichen Verlauf hat. Durch die versetzte Anordnung von fluidundurchlässigen Bereichen, insbesondere von Rippen und/oder Endkörpern, werden Engstellen im Ausfällspalt vermieden. Die fluidundurchlässigen Bereiche können sich am Filtermedium und/oder an der Wasser-Trenneinheit befinden. Es können aber auch andere Bauteile, insbesondere ein Stützrohr, ein Mittelrohr oder Koaleszenzelement vorgesehen sein, deren fluidundurchlässigen Bereiche zu denen des Filtermediums und der Wasser-Trenneinheit versetzt angeordnet sein können. Der Ausfällspalt hat so einen kontinuierlichen, also gleichmäßigen und stetigen Verlauf. Er weist insbesondere keine Engstellen auf. Im Ausfällspalt wird eine gleichmäßige Strömung insbesondere des ausgefällten Wassers erreicht. Turbulenzen werden vermieden. Auf diese Weise wird die Abscheidung von Wasser weiter verbessert. Durch die gleichmäßige Strömungsgeschwindigkeit im Ausfällspalt wird verhindert, dass vom Kraftstoff Wassertropfen in Strömungsrichtung hinter das Trennmedium mitgerissen werden. Wenn vorteilhafterweise vorgesehen ist, dass das Filtermedium von radial innen nach außen durchströmt wird, befindet sich das Trennmedium außerhalb des Filtermediums und umgibt dieses. Wenn alternativ vorgesehen ist, dass das Filtermedium von radial außen nach innen durchströmt wird, befindet sich das Trennmedium in einem Innenraum des Filtermediums.

Vorteilhafterweise kann das Wasser insbesondere in einem Wassersammelraum gesammelt werden, welcher mit dem Wasserauslass verbunden ist. Die Hauptströmungsrichtung des Wassers vor dem Trennmedium wird im Wesentlichen durch die Schwerkraft vorgegeben. Der Hauptströmungsweg des Wassers im Filterelement ist daher bevorzugt so vorgegeben, dass er im Einbauzustand des Filterelements im Wesentlichen räumlich vertikal verläuft. Mit dem erfindungsgemäßen Kraftstofffilter können auch Kraftstoffe gereinigt werden, deren spezifisches Gewicht größer ist als Wasser bei denen analog die Wassertropfen räumlich nach oben steigen. Zu diesem Zweck kann das Filterelement umgekehrt, um 180° um eine Horizontalachse gedreht, angeordnet werden. Entsprechend können der Kraftstoffeinlass, der Kraftstoffauslass und der Wasserauslass entsprechend angeordnet sein.

Das Trennmedium erstreckt sich in Strömungsrichtung hinter den stromaufwärtigen Seiten des Trennmedium-Stützkörpers, insbesondere hinter stromaufwärtigen Seiten der undurchlässigen Bereiche des Trennmedium-Stützkörpers, und zugleich zwischen den undurchlässigen Bereichen.

Dass das Trennmedium hinter stromabwärtigen Seiten des Trennmedium-Stützkörpers, insbesondere hinter stromabwärtigen Seiten der undurchlässigen Bereiche des Trennmedium-Stützkörpers, angeordnet ist, hat den Vorteil, dass bei der Herstellung einer von radial außen nach innen zu durchströmenden Wasser-Trenneinheit das Trennmedium zur Realisierung des Trennmedium-Stützkörpers vorzugsweise mit einem Kunststoff einfach umspritzt werden kann.

Bei einer vorteilhaften Ausführungsform können Streben eines Mittelrohrs des Filtermediums und Streben eines Stützkorbs der Wasser-Trenneinheit, die in gleiche Richtung verlaufen, zueinander versetzt angeordnet sein. Vorteilhafterweise können bei einem koaxialen Filterelement quer zur Achse oder in Umfangsrichtung verlaufende Umfangsstreben des Mittelrohrs und des Stützkorbs zueinander axial versetzt angeordnet sein. Entsprechend können vorteilhafterweise axial zur Achse verlaufende Axialstreben des Mittelrohrs und des Stützkorbs in Umfangsrichtung zueinander versetzt angeordnet sein. Auch schräg zu einer Achse des Filterelements verlaufende Streben können entsprechend zueinander versetzt sein. Auf diese Weise können Überlappung der Streben des Mittelrohrs und des Stützkorbs, welche zu Verengungen in dem Ausfällspalt führen können, vermieden werden.

Bei einer weiteren vorteilhaften Ausführungsform können eine stirnseitige Endscheibe des Filtermediums und ein stirnseitiger Endkörper der Wasser-Trenneinheit in axialer Richtung versetzt zueinander angeordnet sein und eine ringförmige Auslassöffnung des Ausfällspalts begrenzen. Durch die versetzte Anordnung der Endscheibe und des Endkörpers kann erreicht werden, dass der durchströmbare Querschnitt der Auslassöffnung in etwa dem Strömungsquerschnitt des Ausfällspalts für das ausgefällte Wasser entspricht. So kann das ausgefällte Wasser gleichmäßig aus dem Ausfällspalt entweichen. Auf diese Weise wird die Abscheideeffizienz weiter verbessert. Der Strömungsquerschnitt des Ausfällspalts für das ausgefällte Wasser verläuft im Regelfall horizontal. Der durchströmbare Querschnitt der Auslassöffnung verläuft schräg dazu.

Bei einer weiteren vorteilhaften Ausführungsform kann zwischen dem Filtermedium und dem Trennmedium auf der dem Filtermedium zugewandten Seite des Ausfällspalts wenigstens ein als Hohlkörper gestaltetes Koaleszenzmedium zur Abscheidung von im Kraftstoff enthaltenem Wasser angeordnet sein. An dem wenigstens einen Koaleszenzmedium können in Strömungsrichtung nach dem Filtermedium auch kleinste Wassertröpfchen, welche im Kraftstoff enthalten sind, zu größeren Wassertropfen vereinigt werden. Dabei können die feinen Wassertröpfchen am wenigstens einen Koaleszenzmedium zurückgehalten und vergrößert werden, bis sie von der Kraftstoffströmung wieder mitgerissen und aus dem wenigstens einen Koaleszenzmedium ausgetragen werden können. Vorteilhafterweise können zwei oder mehr Koaleszenzmedien in Strömungsrichtung hintereinander angeordnet sein. Dabei kann vorteilhafterweise das in Strömungsrichtung erste Koaleszenzmediums feiner sein, insbesondere eine kleinere Porengröße haben, als das oder die nachfolgenden Koaleszenzmedien. Auf diese Weise kann die Wasserabscheidung an den Koaleszenzmedien weiter verbessert werden.

Ferner können vorteilhafterweise das Filtermedium, das Trennmedium und gegebenenfalls das wenigstens eine Koaleszenzmedium koaxial angeordnet sein. Eine koaxiale Anordnung ist platzsparend. Ferner kann bei einer koaxialen Anordnung ein Strömungsverlauf des Kraftstoffs von radial außen nach innen oder radial innen nach außen einfach optimiert werden. Die Grundfläche des Filtermediums, des wenigstens einen Koaleszenzmediums und des Trennmediums können dabei ähnlich sein. Die Grundflächen können aber auch unterschiedlich sein. Sie können insbesondere rund, oval oder eckig sein.

Vorteilhafterweise können das Filtermedium und/oder das wenigstens eine Koaleszenzmedium jeweils mehrlagig sein, um deren Wirksamkeit zu erhöhen. Alternativ oder ergänzend kann das Trennmedium einlagig sein. Dies erlaubt eine kompakte Bauweise. Einlagige Medien können einfach hergestellt und montiert werden. Vorteilhafterweise kann das Filtermedium so ausgestaltet sein, dass es lediglich als Partikelfilter dient und dort keine Vereinigung von Wassertröpfchen erfolgt. Ferner kann vorteilhafterweise das Trennmedium lediglich zum Zurückhalten von Wassertropfen und nicht zur Filtrierung von Partikeln ausgestaltet sein. Außerdem kann vorteilhafterweise das wenigstens eine Koaleszenzmedium ausschließlich zur Koaleszenz der Wassertropfen dienen. Auf diese Weise können die Filtration der Partikel, die Koaleszenz der Wassertröpfchen und die Abtrennung der Wassertröpfchen vom Kraftstoff getrennt voneinander in unterschiedlichen Stufen erfolgen. Die einzelnen Stufen können so jeweils bezüglich ihrer jeweiligen Funktion optimiert sein.

Vorteilhafterweise kann das Filterelement ein Rundfilterelement sein. Rundfilterelemente können platzsparend aufgebaut werden. Mit Rundfilterelementen kann ein optimales Verhältnis von Filter-/Abscheidefläche zum Bauraum realisiert werden.

Ferner kann vorteilhafterweise das Gehäuse öffenbar sein und das Filterelement kann austauschbar im Gehäuse angeordnet sein. Das Filterelement kann so einfach zum Austausch oder zu Wartungszwecken aus dem Gehäuse entfernt werden.

### Kurze Beschreibung der Zeichnungen

Weitere Vorteile, Merkmale und Einzelheiten der Erfindung ergeben sich aus der nachfolgenden Beschreibung, in ein Ausführungsbeispiel der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Längsschnitt eines Kraftstofffilters mit einem austauschbaren, dreistufigen Filterelement gemäß einem Beispiel, bei dem eine Abschlussendscheibe eines Filtermediums und eine Endscheibe einer WasserTrenneinheit versetzt zueinander angeordnet sind;
- Figur 2: einen Längsschnitt eines austauschbaren, dreistufigen Filterelements gemäß einem ersten Ausführungsbeispiel, welches zu dem Filterelement aus der Figur 1 ähnlich ist;
- Figur 3: einen Querschnitt des Filterelements aus der Figur 2.

In der Figur sind gleiche Bauteile mit gleichen Bezugszeichen versehen.

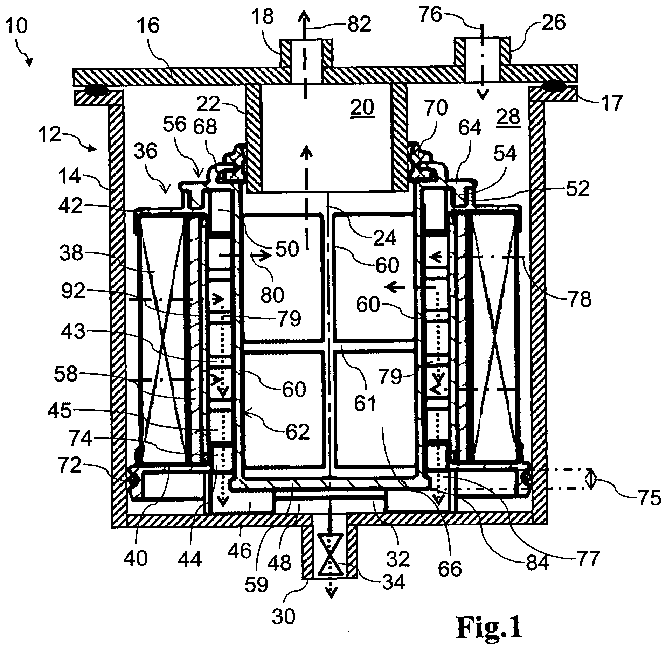

In der Figur 1 ist im Längsschnitt ein Kraftstofffilter 10 eines Kraftstoffsystems einer Brennkraftmaschine eines Kraftfahrzeugs gezeigt. Der Kraftstofffilter 10 dient zur Reinigung des für den Betrieb der Brennkraftmaschine verwendeten Kraftstoffs, beispielsweise Dieselkraftstoff. Ferner dient der Kraftstofffilter 10 zur Abscheidung von in dem Kraftstoff enthaltenem Wasser.

Der Kraftstofffilter 10 verfügt über ein zweiteiliges Gehäuse 12 mit einem becherförmigen Filtertopf 14 und einem Filterdeckel 16, der trennbar auf dem Filtertopf 14 angeordnet ist. Zwischen dem Filtertopf 14 und dem Filterdeckel 16 ist eine Ringdichtung 17 angeordnet.

In dem Deckel 16 ist etwa zentral ein Auslassstutzen 18 für den gereinigten Kraftstoff angeordnet, welcher außerhalb des Gehäuses 12 mit einer in der Figur 1 nicht gezeigten Kraftstoffableitung verbunden ist. Im Inneren des Gehäuses 12 ist der Auslassstutzen 18 mit einem Ablaufraum 20 in einem Innenraum eines Verbindungsstutzens 22 verbunden. Der Verbindungsstutzen 22 erstreckt sich auf der dem Inneren des Gehäuses 12 zugewandten Seite des Deckels 16 koaxial zu einer Filterachse 24. In der normalen Einbaulage unter normalen Betriebsbedingungen der Brennkraftmaschine verläuft die Filterachse 24, wie in der Figur 1 gezeigt, räumlich vertikal. "Axial", "radial", "koaxial" und "umfangsmäßig" beziehen sich im Folgenden, wenn nicht anders angegeben, auf die Filterachse 24.

Radial außerhalb des Verbindungsstutzens 22 weist der Deckel 16 einen Einlassstutzen 26 für den zu reinigenden Kraftstoff auf, der mit einem Zulaufraum 28 im Gehäuse 12 verbunden ist. Außerhalb des Gehäuses 12 ist der Einlassstutzen 26 mit einer in der Figur 1 nicht gezeigten Kraftstoffzuleitung für den Kraftstoff verbunden.

Im Boden des Filtertopfs 14 ist ein Wasserablaufstutzen 30 koaxial zur Filterachse 24 angeordnet. Der Wasserablaufstutzen 30 ist mit einem Wassersammelraum 32 unten im Gehäuse 12 verbunden. Außerhalb des Gehäuses 12 ist der Wasserablaufstutzen 30 mit einer nicht gezeigten Wasserablassleitung verbunden, über die von dem Kraftstoff abgeschiedenes Wasser aus dem Gehäuse 12 abgeleitet werden kann. In dem Wasserablaufstutzen 30 ist ein Wasserablassventil 34 mit einem Wasserstandsensor angeordnet. Im Ruhezustand ist das Wasserablassventil 34 geschlossen, sodass keine Flüssigkeit aus dem Wassersammelraum 32 durch den Wasserablaufstutzen 30 aus dem Gehäuse 12 entweichen kann. Bei Erreichen eines vorgegebenen maximalen Wasserstandes im Wassersammelraum 32 öffnet das Wasserablassventil 34 automatisch, sodass das abgeschiedene Wasser über den Wasserablaufstutzen 30 abgelassen werden kann.

In dem Gehäuse 12 ist ein austauschbares Filterelement 36 angeordnet. Das Filterelement 36 ist als Rundfilterelement ausgestaltet. Das Filterelement 36 trennt den Einlassstutzen 26 dicht von dem Auslassstutzen 18. Das Filterelement 36 umfasst ein sternförmig gefaltetes Filtermedium 38, mit dem insbesondere Partikel aus dem zu reinigenden Kraftstoff heraus filtriert werden. Das Filtermedium 38 hat insgesamt die Form eines koaxialen Kreiszylindermantels. An einer dem Boden des Filtertopfs 14 zugewandten unteren Stirnseite ist das Filtermedium 38 dicht mit einer fluidundurchlässigen Abschlussendscheibe 40 verbunden. An seiner gegenüberliegenden, dem Deckel 16 zugewandten oberen Stirnseite ist das Filtermedium 38 dicht mit einer Anschlussendscheibe 42 verbunden. Zwischen der Anschlussendscheibe 42 und der Abschlussendscheibe 40 erstreckt sich in einem Innenraum 45 des Filtermediums 38 koaxial ein skelettartiges, Fluiddurchlässe aufweisendes Mittelrohr 43, welches die beiden Endscheiben 40 und 42 stabil miteinander verbindet.

Die Abschlussendscheibe 40 weist eine koaxiale Öffnung 44 auf. Die Öffnung 44 ist von dem Mittelrohr 43 umgeben. Die Öffnung 44 verbindet den Innenraum 45 mit dem Wassersammelraum 32. Auf der dem Boden des Filtertopfs 14 zugewandten Außenseite verfügt die Abschlussendscheibe 40 über vier Stützstege 46, die sich gleichmäßig verteilt entlang eines gedachten koaxialen Kreiszylindermantels erstrecken. Der gedachte Kreiszylindermantel umgibt die Öffnung 44 und den Wasserablaufstutzen 30. Mit den Stützstegen 46 wird das Filterelement 36 gegen den Boden des Filtertopfs 14 abgestützt. Zwischen den Stützstegen 46 befinden sich Verbindungsöffnungen 48, über die sich Wasser im Wassersammelraum 32 auch radial außerhalb der Stützstege 46 verteilen kann.

Die Anschlussendscheibe 42 weist eine koaxiale Öffnung 50 auf. Die Öffnung 50 ist von zwei koaxialen Vorsprüngen umgeben, die sich an der Außenseite der Anschlussendscheibe 42 in axialer Richtung erstrecken. Die beiden Vorsprünge begrenzen eine Aufnahmenut 52 für einen ringartigen Einstecksteg 54 einer Wasser-Trenneinheit 56 des Filterelements 36.

Zwischen der radial inneren Umfangsseite des Filtermediums 38 und dem Mittelrohr 43 befindet sich ein erstes koaxiales Koaleszenzmedium 58. Radial innerhalb des ersten Koaleszenzmediums 58 schließt sich ein zweites koaxiales Koaleszenzmediums 92 an. Die Koaleszenzmedien 58 und 92 sind jeweils einlagige Faservliese. Das erste Koaleszenzmedium 58 ist feiner, beispielsweise hat es eine kleinere Maschenweite, als das zweite Koaleszenzmedium 92. Die Koaleszenzmedien 58 und 92 sind jeweils umfangsmäßig geschlossen und erstrecken sich zwischen der Anschlussendscheibe 42 und der Abschlussendscheibe 40. Die Koaleszenzmedien 58 und 92 dienen der Zusammenführung auch von kleinsten im Kraftstoff enthaltenen Wassertröpfchen zu größeren Wassertropfen.

Die Wasser-Trenneinheit 56 verfügt über einen Trennmedium-Stützkörper in Form eines Stützkorbs 62 mit einem Anschlussabschnitt 64, welcher auch den Einstecksteg 54 aufweist, und ein Trennmedium 66.

Der Anschlussabschnitt 64 ist etwa scheibenförmig mit einer koaxialen Öffnung, in die der Verbindungsstutzen 22 des Deckels 16 hinein ragt. Auf seiner dem Deckel 16 zugewandten Außenseite verfügt der Anschlussabschnitt 64 über einen koaxialen Anschlussstutzen 68. Der Anschlussstutzen 68 ist an seiner freien Stirnseite um 90 Grad radial nach innen gebogen. Auf dem radial inneren Rand des Anschlussstutzens 68 sitzt eine Profilringdichtung 70. In den Anschlussstutzen 68 ist der Verbindungsstutzen 22 so eingesteckt, dass die Verbindung mit der Profilringdichtung 70 abgedichtet ist.

Die Wasser-Trenneinheit 56 ist mit dem Trennmedium 66 voraus axial durch die Öffnung 50 der Anschlussendscheibe 42 gesteckt. Der Stützkorb 62 und das Trennmedium 66 befinden sich in dem von den Koaleszenzmedien 58 und 92 begrenzten Innenraum, also auch im Innenraum 45 des Filtermediums 38.

Das Trennmedium 66 besteht aus einem hydrophoben Siebgewebe. Es hat die Form eines zur Filterachse 24 koaxialen Rohres. Es erstreckt sich von der axialen Höhe der Anschlussendscheibe 42 bis zur axialen Höhe der Abschlussendscheibe 40. Das Trennmedium 68 ist umfangsmäßig geschlossen. Die axiale Ausdehnung des Trennmediums 66 entspricht zumindest annähernd der axialen Ausdehnung des Filtermediums 38 und der Koaleszenzmedien 58 und 92.

Die Umfangswand des Stützkorbs 62 ist gitterartig aufgebaut. Auf seiner der Verbindungsstutzen 22 zugeordnet Stirnseite ist der Stützkorb 62 offen. Die dem Wassersammelraum 32 zugewandte untere Stirnseite des Stützkorbs 62 ist mit einer Endscheibe 59 verschlossen. Die Endscheibe 59 ist über vier in Umfangsrichtung gleichmäßig verteilte Axialstreben 60 mit dem Anschlussabschnitt 64 verbunden. In axialer Richtung etwa mittig zwischen der Endscheibe 59 und dem Anschlussabschnitt 64 ist ein zur Filterachse 24 koaxialer Stützring 61 angeordnet, der die Axialstreben 60 miteinander verbindet. Die Endscheibe 59, die Axialstreben 60 und der Stützring 61 sind fluidundurchlässig. Das Trennmedium 66 schließt mit radial äußeren Seiten der Axialstreben 60, des Stützrings 61 und der Endscheibe 59 ab. Vorzugsweise befindet sich das Trennmedium 66 in einer Strömungsrichtung 80 des Kraftstoffs durch das Trennmedium 66 auf Höhe der radial äußeren, also stromaufwärtigen Seiten der Axialstreben 60 und des Stützrings 61. Das Trennmedium 66 kann sich aber auch in Strömungsrichtung 80 hinter den radial äußeren Seiten der Axialstreben 60 und des Stützrings 61 befinden. Der Stützkorb 62 kann an das Trennmedium 66 angeformt sein oder umgekehrt. Der Stützkorb 62 und das Trennmedium 66 können auch als separate Teile miteinander verbunden sein. Das Trennmedium 66 und der Stützkorb 62 können auch aus demselben Material, beispielsweise Kunststoff, einstückig gefertigt, beispielsweise nach einem Spritzgussverfahren gegossen, sein.

Zwischen dem Trennmedium 66 und den Koaleszenzmedien 58 und 92 befindet sich im Innenraum 45 ein Ausfällspalt 74. Der Ausfällspalt 74 hat die Form eines Ringraums. Der Ausfällspalt 74 ist radial außen durch die Koaleszenzmedien 58 und 92 und das Mittelrohr 43 und radial innen durch das Trennmedium 66 begrenzt.

Der Stützkorb 62 überragt die stirnseitige Außenfläche der Abschlussendscheibe 40 des Filterelements 36 in axialer Richtung um einen Versatz 75. Zwischen der Endscheibe 59 des Stützkorbs 62 und der Abschlussendscheibe 40 ist eine ringförmige Auslassöffnung 77 realisiert, welche den Ausfällspalt 74 mit dem Wassersammelraum 32 verbindet. Die versetzte Anordnung der Abschlussendscheibe 40 und Endscheibe 59 ermöglicht, dass der Strömungsquerschnitt des Ausfällspalts 74 kontinuierlich ohne Engstelle in die Auslassöffnung 77 übergeht. Die radiale Ausdehnung des Ausfällspalts 74 hat in axialer Richtung betrachtet einen kontinuierlichen Verlauf. Der Strömungsquerschnitt des Ausfällspalts 74 für das ausgefällte Wasser verläuft senkrecht zur Filterachse 24. Der durchströmbare Querschnitt der Auslassöffnung 77 verläuft schräg zur Filterachse 24.

Der Stützring 61 des Stützkorbs 62 ist in axialer Richtung versetzt zu fluidundurchlässigen Umfangsringen 79 des Mittelrohrs 43 angeordnet. Die Axialstreben 60 des Stützkorbs 62 sind umfangsmäßig versetzt zu fluidundurchlässigen Axialstreben des Mittelrohrs 43, die in der Figur 1 verdeckt von der Wasser-Trenneinheit 56 sind, angeordnet. So werden auch hier Engstellen im Ausfällspalt 74 vermieden.

An der radial äußeren Umfangsseite der Abschlussendscheibe 40 ist außerdem eine Ringdichtung 72 angeordnet, welche sich radial außen gegen die radial innere Umfangsseite des Filtertopfs 14 abstützt. Die Ringdichtung 72 dichtet dem Zulaufraum 28 gegen den Wassersammelraum 32 ab.

Beim Betrieb des Kraftstofffilters 10 wird zu reinigender Kraftstoff aus der Kraftstoffzuleitung angedeutet durch einen Pfeil 76 durch den Einlassstutzen 26 dem Zulaufraum 28 zugeführt.

Der Kraftstoff durchströmt das Filtermedium 38, angedeutet durch Pfeile 78, von dessen Rohseite radial außen zu seiner Reinseite radial innen. Dabei wird der Kraftstoff von Partikeln befreit. Das Filtermedium 38 bildet eine erste Stufe des insgesamt dreistufigen Kraftstofffilters 10 für die Reinigung/Wasserabscheidung.

Auf der Reinseite durchströmt der von Partikeln befreite Kraftstoff die Koaleszenzmedien 58 und 92 von radial außen nach innen. Dabei werden im Kraftstoff enthaltene, auch kleinste Wassertröpfen an den Koaleszenzmedien 58 und 92 eingefangen und zu größeren Wassertropfen vereinigt. Die Koaleszenzmedien 58 und 92 bilden eine zweite Stufe für die Reinigung/Wasserabscheidung.

Der Kraftstoff und die großen Wassertropfen durchströmen die Öffnungen des Mittelrohrs 43 und gelangen in den Ausfällspalt 74.

Der Kraftstoff durchströmt das Trennmedium 66, welches eine dritte Stufe für die Reinigung/Wasserabscheidung bildet, von radial außen nach innen, angedeutet durch Pfeile 80, und gelangt nach oben in den Ablaufraum 20. Der gereinigte und von Wasser befreite Kraftstoff verlässt den Ablaufraum 20 über den Auslassstutzen 18, angedeutet durch Pfeile 82, und wird der Kraftstoffableitung zugeführt.

Die großen Wassertropfen hingegen werden mit dem Trennmedium 66 zurückgehalten. Die Wassertropfen sinken im Ausfällspalt 74 aufgrund ihres im Vergleich zum Kraftstoff größeren spezifischen Gewichts nach unten, angedeutet durch Pfeile 84, durch die Auslassöffnung 77 in den Wassersammelraum 32. Die versetzte Anordnung der Umfangsringe 79 und des Stützrings 61, sowie der Abschlussendscheibe 40 und der Endscheibe 59, wirken sich positiv auf den Strömungsverlauf im Ausfällspalt 74 sowohl des Kraftstoffs als auch der nach unten sinkenden Wassertropfen aus.

Sobald der Wasserstandsensor des Wasserablassventils 34 das Erreichen des vorgegebenen Maximalwasserstands erfasst, wird das Wasserablassventil 34 automatisch geöffnet. Das Wasser verlässt den Wassersammelraum 32 durch den Wasserablaufstutzen 30 und gelangt in die Wasserablaufleitung.

Zu Wartungszwecken, beispielsweise zum Austausch oder zur Reinigung des Filterelements 36, wird der Deckel 16 in axialer Richtung von dem Filtertopf 14 entfernt. Das Filterelement 36 wird dann in axialer Richtung aus dem Filtertopf 14 heraus gezogen.

Zum Einbau wird das Filterelement 36 mit der Abschlussendscheibe 40 voran in axialer Richtung in den Filtertopf 14 gesteckt. Anschließend wird der Deckel 16 mit dem Verbindungsstutzen 22 voran in axialer Richtung auf die offene Seite des Filtertopfs 14 gesteckt, so dass der Verbindungsstutzen 22 dicht in die Profilringdichtung 70 ragt.

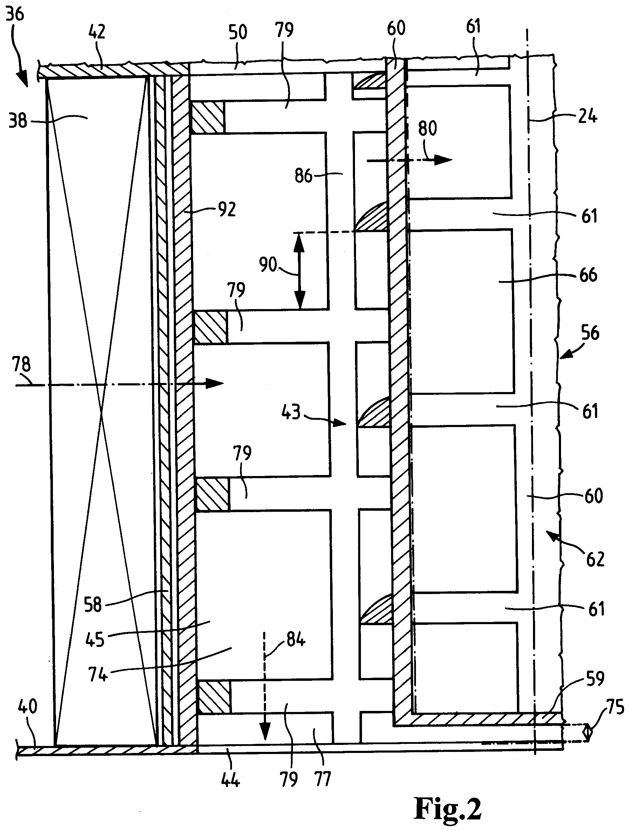

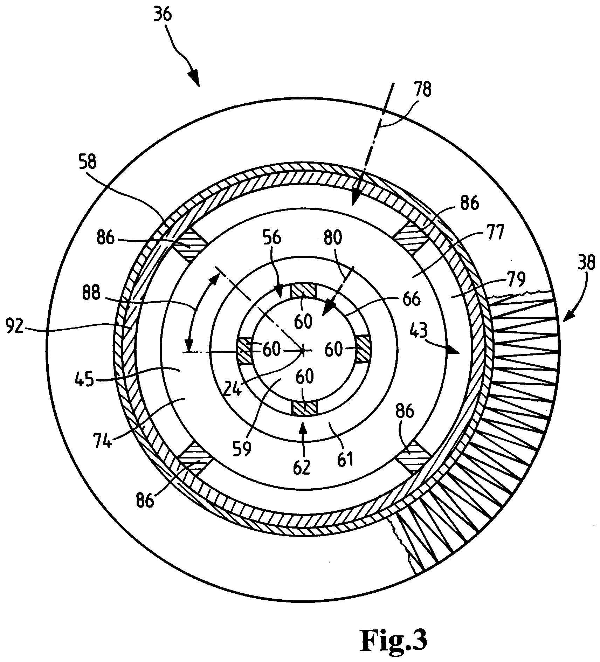

In den Figuren 2 und 3 ist ein erstes Ausführungsbeispiel eines erfindungsgemäßen Filterelements 36 gezeigt. Diejenigen Elemente, die zu denen des Beispiels aus Figur 1 ähnlich sind, sind mit denselben Bezugszeichen versehen. Das erste Ausführungsbeispiel unterscheidet sich von dem Beispiel gemäß Figur 1 dadurch, dass der Stützkorb 62 der Wasser-Trenneinheit 56 eine Mehrzahl von Stützringen 61 aufweist. Die Stützringe 61 sind analog zum Beispiel gemäß Figur 1 zu den Umfangsringen 79 des Mittelrohrs 43 in axialer Richtung um einen Axialversatz 90 versetzt. Auf diese Weise werden dort Engstellen im Ausfällspalt 74 vermieden.

Die Stützringe 61 umgeben die Axialstreben 60 radial außen. Die Stützringe 61 und die Axialstreben 60 sind einstückig miteinander verbunden. Das Trennmedium 66 ist radial innen auf den Axialstreben 60 angeordnet. Es befindet sich also in Strömungsrichtung 80 des Kraftstoffs durch das Trennmedium 66 hinter den stromaufwärtigen, also radial inneren und damit auch den radial äußeren Seiten der Stützringe 61 und der Axialstreben 60. Zur Herstellung der Wasser-Trenneinheit 56 kann das Trennmedium 66 zur Realisierung des Stützkorbs 62 radial außen mit Kunststoff umspritzt werden. Das Trennmedium 66 kann sich alternativ auch in Strömungsrichtung 80 auf Höhe der radial äußeren Seiten der Axialstreben 60 befinden.

Die Axialstreben 86 des Mittelrohrs 43 und die Axialstreben 60 des Stützkorbs 62 sind analog zum Beispiel gemäß Figur 1 umfangsmäßig um einen Versatz 88 versetzt. So werden Engstellen im Ausfällspalt 74 vermieden.

Außerdem weisen die Stützringe 61 geneigte, insbesondere abgerundete, Oberseiten auf, wodurch die Wassertropfen, welche von dem Trennmedium 66 zurückgehalten werden, besonders gut nach unten abfließen können.

Bei dem oben beschriebenen Beispielen eines Kraftstofffilters 10 und eines Filterelements 36 sind unter anderen folgenden Modifikationen möglich:
Die Erfindung ist nicht beschränkt auf einen Kraftstofffilter 10 einer Brennkraftmaschine eines Kraftfahrzeugs. Vielmehr kann sie auch bei andersartigen Brennkraftmaschinen, beispielsweise bei Industriemotoren, eingesetzt werden.

Statt für Dieselkraftstoff kann der Kraftstofffilter 10 auch zur Reinigung/Wasserabscheidung von andersartigem flüssigem Kraftstoff eingesetzt werden. Falls ein Kraftstoff verwendet wird, dessen spezifisches Gewicht größer ist als Wasser, steigen analog die Wassertropfen auf. In diesem Fall kann das Filterelement 36 umgekehrt angeordnet sein. Ebenso können der Kraftstoffeinlass, der Kraftstoffauslass und der Wasserauslass entsprechend zweckmäßig angeordnet sein.

Das Filtermedium 38 kann statt sternförmig gefaltet auch als andersartiger Hohlkörper, beispielsweise auch ungefaltet, realisiert sein.

Die Koaleszenzmedien 58 und 92 können statt aus einem einlagigen Faservlies auch aus einem andersartigen, auch mehrlagigen zur Koaleszenz von Wassertropfen geeigneten Koaleszenzmaterial bestehen. Es können auch mehr oder weniger als zwei Koaleszenzmedien hintereinander durchströmbar vorgesehen sein.

Anstatt dass der Stützkorb 62 die stirnseitige Außenfläche der Abschlussendscheibe 40 des Filterelements 36 in axialer Richtung überragt, kann auch die Abschlussendscheibe 40 den Stützkorbs 62 um einen Versatz überragen, der einen kontinuierlichen Übergang vom Ausfällspalt 74 zu Auslassöffnung 77 ermöglicht.

Es können auch mehrere Stützringe 61 im Stützkorbs 62 vorgesehen sein, die zu etwaigen andersartigen fluidundurchlässigen Bereichen des Filtermediums 38, der Koaleszenzmedien 58 und 92und/oder des Mittelrohrs 43 versetzt angeordnet sind. Es kann auch ein Stützkorb ohne Stützring verwendet werden. Das Trennmedium kann auch in den Stützkorbs integriert sein. Beispielsweise kann das Trennmedium mit dem Stützkorb einstückig hergestellt sein.

Zusätzlich können auch die Axialstreben 60 zu entsprechenden fluidundurchlässigen Axialstreben des Mittelrohrs 43 in Umfangsrichtung versetzt angeordnet sein.

Das Filtermedium 38, die Koaleszenzmedien 58 und 92 und/oder das Trennmedium 66 können statt als Hohlzylinder auch in anderer Form, beispielsweise als Hohlkegel, realisiert sein. Sie können statt mit runden Grundflächen auch mit andersartigen, beispielsweise ovalen oder eckigen Grundflächen realisiert sein.

Auf die Ringdichtung 72 kann auch verzichtet werden. Bevorzugt kann die Abschlussendscheibe 40 eng an der radial inneren Umfangsseite des Filtertopfs 14 anliegen.

Das Trennmedium 66 kann statt im Innenraum 45 des Filtermediums 38 auch radial außen, das Filtermedium 38 und die Koaleszenzmedien 58 und 92 umgebend, angeordnet sein. Der zu reinigende Kraftstoff kann dann das Filtermedium 38 von radial innen nach außen durchströmen. Die Koaleszenzmedien 58 und 92 können sich dann bevorzugt ebenfalls radial außen befinden und das Filtermedium 38 umgeben.

Der zu reinigende Kraftstoff kann statt von oben auch von unten der Rohseite des Filtermediums 38 zugeführt werden. Der Wasserablaufstutzen 30 kann statt zentral auch exzentrisch im Boden des Filtertopfs 14 angeordnet sein.

Anstelle des austauschbaren Filterelements 36 kann auch ein im Gehäuse 12 fest montiertes Filterelement vorgesehen sein.

## Patentansprüche

1. Filterelement (36) eines Kraftstofffilters (10) für Kraftstoff, insbesondere Dieselkraftstoff, einer Brennkraftmaschine insbesondere eines Kraftfahrzeugs, das in einem Gehäuse (12) des Kraftstofffilters (10) so angeordnet werden kann, dass es einen Kraftstoffeinlass (26) des Gehäuses (12) dicht von einem Kraftstoffauslass (18) trennt, und das ein als Hohlkörper ausgestaltetes Filtermedium (38) aufweist, das zur Filtrierung des Kraftstoffs von innen nach außen oder von außen nach innen durchströmbar ist, wobei im Strömungsweg (78) des Kraftstoffs hinter dem Filtermedium (38), dieses umgebend oder in dem von ihm begrenzten Innenraum (45), eine Wasser-Trenneinheit (56) mit einem als Hohlkörper gestalteten hydrophoben, kraftstoffdurchlässigen Trennmedium (66) zur Abscheidung von im Kraftstoff enthaltenem Wasser und mit wenigstens einem Trennmedium-Stützkörper (62) so angeordnet ist, dass zwischen dem Filtermedium (38) und dem Trennmedium (66) ein Ausfällspalt (74) realisiert ist, und das Trennmedium (66) in einer Strömungsrichtung (80) des Kraftstoffs durch das Trennmedium (66) auf Höhe von und/oder hinter stromaufwärtigen Seiten von undurchlässigen Bereichen (60, 61) des wenigstens einen Trennmedium-Stützkörpers (62) angeordnet ist, **dadurch gekennzeichnet, dass** der wenigstens eine Trennmedium-Stützkörper (62) als Stützkorb mit einer Mehrzahl von Stützringen (61) ausgebildet ist, **dass** die Stützringe (61) geneigte, insbesondere abgerundete, Oberseiten aufweisen und **dass** das Trennmedium (66) in Strömungsrichtung (80) des Kraftstoffs durch das Trennmedium (80) hinter den geneigten Oberseiten der Stützringe (61) angeordnet ist.

2. Filterelement nach Anspruch 1, **dadurch gekennzeichnet, dass** wenigstens ein Filtermedium-Stützkörper (40, 42, 43) vorgesehen ist, welcher das Filtermedium (38) zumindest seitens des Ausfällspaltes (74) abstützt.

3. Filterelement nach Anspruch 2, **dadurch gekennzeichnet, dass** für flüssiges Fluid undurchlässige Bereiche (40, 59, 60, 61, 79) des Filtermedium-Stützkörpers (40, 42, 43) und des Trennmedium-Stützkörpers (62) zumindest teilweise versetzt zueinander angeordnet sind, vorzugsweise derart, dass der Ausfällspalt (74) zumindest in axialer Richtung einen kontinuierlichen Verlauf hat.

4. Filterelement nach Anspruch 1, 2 oder 3, **dadurch gekennzeichnet, dass** für flüssiges Fluid undurchlässige Streben (79, 86) eines als Mittelrohr (43) ausgebildeten Filtermedium-Stützkörpers und Streben (60, 61) des Trennmedium-Stützkörpers (62), die in gleiche Richtung verlaufen, zueinander versetzt angeordnet sind.

5. Filterelement nach einem der vorigen Ansprüche, **dadurch gekennzeichnet, dass** eine stirnseitige Endscheibe (40) des Filtermediums (38) und ein stirnseitiger Endkörper (59) der Wasser-Trenneinheit (56) in axialer Richtung versetzt zueinander angeordnet sind und eine ringförmige Auslassöffnung (77) des Ausfällspalts (74) begrenzen.

6. Filterelement nach einem der vorigen Ansprüche, **dadurch gekennzeichnet, dass** zwischen dem Filtermedium (38) und dem Trennmedium (66) auf der dem Filtermedium (38) zugewandten Seite des Ausfällspalts (74) wenigstens ein als Hohlkörper gestaltetes Koaleszenzmedium (58, 92) zur Abscheidung von im Kraftstoff enthaltenem Wasser angeordnet ist.

7. Filterelement nach einem der vorigen Ansprüche, **dadurch gekennzeichnet, dass** das Filtermedium (38), das Trennmedium (66) und gegebenenfalls das wenigstens eine Koaleszenzmedium (58, 92) koaxial angeordnet sind.

8. Filterelement nach einem der vorigen Ansprüche, **dadurch gekennzeichnet, dass** das Filtermedium (38) und/oder das wenigstens eine Koaleszenzmedium (58, 92) jeweils mehrlagig sind.

9. Filterelement nach einem der vorigen Ansprüche, **dadurch gekennzeichnet, dass** das Filterelement ein Rundfilterelement (36) ist.

10. Kraftstofffilter (10) für Kraftstoff, insbesondere Dieselkraftstoff, einer Brennkraftmaschine insbesondere eines Kraftfahrzeugs, mit einem Gehäuse (12), welches wenigstens einen Kraftstoffeinlass (26) für zu reinigenden Kraftstoff, wenigstens einen Kraftstoffauslass (18) für gereinigten Kraftstoff und wenigstens einen Wasserauslass (30) für vom Kraftstoff abgeschiedenes Wasser aufweist und in dem ein Filterelement (36) nach einem der vorigen Ansprüche angeordnet ist, das den Kraftstoffeinlass (26) dicht von dem Kraftstoffauslass (18) trennt.

11. Kraftstofffilter nach einem der vorigen Ansprüche, **dadurch gekennzeichnet, dass** das Gehäuse (12) öffenbar ist und das Filterelement (36) austauschbar im Gehäuse (12) angeordnet ist.

## Claims

1. Filter element (36) of a fuel filter (10) for fuel, in particular Diesel fuel, of an internal combustion engine in particular of a motor vehicle, which can be disposed in a housing (12) of the fuel filter (10) in such a way that it separates a fuel inlet (26) of the housing (12) tightly from a fuel outlet (18) and which features a filter medium (38) designed as hollow body which can be flowed through from the inside to the outside or from the outside to the inside for filtering the fuel, wherein a water separation unit (56) with a hydrophobic, fuel-permeable separating medium (66) designed as hollow body for separating water contained in the fuel and with at least one separating medium support structure (62) is disposed in a flow path (78) of the fuel behind the filter medium (38), surrounding it or in the interior area (45) defined by it, in such a way that between the filter medium (38) and the separating medium (66) a precipitation gap (74) is realized and the separating medium (66) is disposed in a flow direction (80) of the fuel through the separating medium (66) at the level of and/or behind upstream sides of impermeable areas (60, 61) of the at least one separating medium support structure (62), **characterized in that** the at least one separating medium support structure (62) is designed as supporting cage with a plurality of supporting rings (61), **that** the supporting rings (61) feature inclined, in particular rounded, upper sides and **that** the separating medium (66) is disposed in flow direction (80) of the fuel through the separating medium (80) behind the inclined upper sides of the supporting rings (61).

2. Filter element according to claim 1, **characterized in that** at least one filter medium support structure (40, 42, 43) is provided which supports the filter medium (38) at least on the side of the precipitation gap (74).

3. Filter element according to claim 2, **characterized in that** areas (40, 59, 60, 61, 79) of the filter medium support structure (40, 42, 43) and of the separating medium support structure (62), which are impermeable for liquid fluid, are at least partially arranged offset in relation to each other, preferably in such a way that the precipitation gap (74) extends at least in axial direction continuously.

4. Filter element according to claim 1, 2 or 3, **characterized in that** struts (79, 86) impermeable for liquid fluid of a filter medium support structure designed as central tube (43) and struts (60, 61) of the separating medium support structure (62), which extend in the same direction, are partially arranged offset in relation to each other.

5. Filter element according to one of the above claims, **characterized in that** a frontal end disk (40) of the filter medium (38) and a frontal end body (59) of the water separation unit (56) are offset in axial direction in relation to each other and define an annular outlet port (77) of the precipitation gap (74).

6. Filter element according to one of the above claims, **characterized in that** at least one coalescence medium (58, 92) designed as hollow body for separating water contained in the fuel is disposed between the filter medium (38) and the separating medium (66) on the side of the precipitation gap (74) facing the filter medium (38).

7. Filter element according to one of the above claims, **characterized in that** the filter medium (38), the separating medium (66) and, if necessary, the at least one coalescence medium (58, 92) are disposed coaxially.

8. Filter element according to one of the above claims, **characterized in that** the filter medium (38) and/or the at least one coalescence medium (58, 92) are multi-layered each.

9. Filter element according to one of the above claims, **characterized in that** the filter element is a round filter element (36).

10. Fuel filter (10) for fuel, in particular Diesel fuel, of an internal combustion engine in particular of a motor vehicle, with a housing (12), which features at least one fuel inlet (26) for fuel to be cleaned, at least one fuel outlet (18) for cleaned fuel and at least one water outlet (30) for water separated from the fuel, and in which a filter element (36) is disposed according to one of the above claims, that separates the fuel inlet (26) tightly from the fuel outlet (18).

11. Fuel filter according to one of the above claims, **characterized in that** the housing (12) is openable and that the filter element (36) is disposed replaceably in the housing (12).

## Revendications

1. Élément filtrant (36) d'un filtre à carburant (10), en particulier à gazole, d'un moteur à combustion interne en particulier d'un véhicule automobile, qui peut être placé dans un boîtier (12) du filtre à carburant (10) de manière à ce qu'il sépare une entrée de carburant (26) du boîtier (12) de façon étanche d'une sortie de carburant (18) et qui présente un milieu filtrant (38) exécuté sous forme de corps creux qui peut être traversé de l'intérieur vers l'extérieur ou de l'extérieur vers l'intérieur à des fins de filtration du carburant, une unité de séparation d'eau (56) dotée d'un milieu de séparation (66) exécuté en tant que corps creux, hydrophobe et perméable au carburant et destiné à séparer l'eau contenue dans le carburant et d'au moins un élément d'appui pour le milieu de séparation (62) étant disposée dans le trajet d'écoulement (78) du carburant, derrière le milieu filtrant (38), entourant ce dernier ou dans l'espace intérieur (45) limité par ce dernier, de manière à ce qu'une fente de précipitation (74) soit ménagée entre le milieu filtrant (38) et le milieu de séparation (66), et le milieu de séparation (66) étant disposé dans un sens du flux (80) du carburant à travers le milieu de séparation (66) à hauteur de et/ou derrière des côtés en amont de zones imperméables (60, 61) de l'élément d'appui pour le milieu de séparation (62), au moins au nombre d'un, **caractérisé en ce que** l'élément d'appui pour le milieu de séparation (62), au moins au nombre d'un, est réalisé en tant que panier de support avec plusieurs bagues d'appui (61), **que** les bagues d'appui (61) présentent des faces supérieures inclinées, en particulier arrondies, et **que** le milieu de séparation (66) est disposé dans le sens du flux (80) du carburant à travers le milieu de séparation (80) derrière les faces supérieures inclinées des bagues d'appui (61).

2. Élément filtrant selon la revendication 1, **caractérisé en ce qu**'au moins un élément d'appui pour le milieu filtrant (40, 42, 43) est prévu, lequel soutient le milieu filtrant (38) au moins du côté de la fente de précipitation (74).

3. Élément filtrant selon la revendication 2, **caractérisé en ce que** des zones imperméables à un fluide liquide (40, 59, 60, 61, 79) de l'élément d'appui pour le milieu filtrant (40, 42, 43) et de l'élément d'appui pour le milieu de séparation (62) sont disposées au moins en partie de façon décalée les unes par rapport aux autres, de préférence de sorte que la fente de précipitation (74) évolue de manière continue au moins en sens axial.

4. Élément filtrant selon la revendication 1, 2 ou 3, **caractérisé en ce que** des entretoises imperméables à un fluide liquide (79, 86) d'un élément d'appui pour le milieu filtrant exécuté en tant que tube central (43) et des entretoises (60, 61) de l'élément d'appui pour le milieu de séparation (62), lesquelles évoluent dans la même direction, sont disposées de façon décalée les unes par rapport aux autres.

5. Élément filtrant selon l'une des revendications précédentes, **caractérisé en ce qu**'un disque d'extrémité (40) frontal du milieu filtrant (38) et un élément d'extrémité frontal (59) de l'unité de séparation d'eau (56) sont disposés en sens axial de façon décalée l'un par rapport à l'autre et limitent une ouverture de sortie (77) annulaire de la fente de précipitation (74).

6. Élément filtrant selon l'une des revendications précédentes, **caractérisé en ce qu**'au moins un milieu de coalescence (58, 92) exécuté en tant que corps creux et destiné à séparer l'eau contenue dans le carburant est disposé entre le milieu filtrant (38) et le milieu de séparation (66) du côté dirigé vers le milieu filtrant (38) de la fente de précipitation (74).

7. Élément filtrant selon l'une des revendications précédentes, **caractérisé en ce que** le milieu filtrant (38), le milieu de séparation (66) et le cas échéant le milieu de coalescence (58, 92), au moins au nombre d'un, sont disposés de manière coaxiale.

8. Élément filtrant selon l'une des revendications précédentes, **caractérisé en ce que** le milieu filtrant (38) et/ou le milieu de coalescence (58, 92), au moins au nombre d'un, sont chacun constitués de plusieurs couches.

9. Élément filtrant selon l'une des revendications précédentes, **caractérisé en ce que** l'élément filtrant est un élément filtrant rond (36).

10. Filtre à carburant (10), en particulier à gazole, d'un moteur à combustion interne en particulier d'un véhicule automobile, avec un boîtier (12) qui présente au moins une entrée de carburant (26) pour le carburant à filtrer, au moins une sortie de carburant (18) pour le carburant filtré et au moins un écoulement d'eau (30) pour l'eau séparée du carburant, et dans lequel est disposé un élément filtrant (36) selon l'une des revendications précédentes, lequel sépare de façon étanche l'entrée de carburant (26) de la sortie de carburant (18).

11. Filtre à carburant selon l'une des revendications précédentes, **caractérisé en ce que** le boîtier (12) peut être ouvert et que l'élément filtrant (36) est disposé de manière échangeable dans le boîtier (12).
